# EUROPEAN PATENT SPECIFICATION

(11) **EP 4 302 976 B1**
(45) Date of publication and mention of the grant of the patent: **01.04.2026**
(21) Application number: 22183326.2
(22) Date of filing: 06.07.2022
(51) Int. Cl.: B29C 73/16, B29L 30/00

(54) **NATURAL RUBBER FREE SEALANT FOR TIRES BASED ON RECYCLED COMPOUNDS**
NATURKAUTSCHUKFREIES DICHTUNGSMITTEL FÜR REIFEN AUF BASIS VON REZYKLIERTEN VERBINDUNGEN
PRODUIT D'ÉTANCHÉITÉ SANS CAOUTCHOUC NATUREL POUR LES PNEUS BASÉ SUR DES COMPOSÉS RECYCLÉS

(43) Date of publication of application: 10.01.2024
(73) Proprietor: Sumitomo Rubber Industries, Ltd., Kobe-shi, Hyogo-ken 651-0072 (JP)
(72) Inventor: JIMENEZ, Angel J., 63456 Hanau (DE); KERN, Christoph T., 63456 Hanau (DE); SCHMIDT, Anja, 63456 Hanau (DE)
(74) Representative: Manitz Finsterwald Patent- und Rechtsanwaltspartnerschaft mbB

(56) References cited:
- EP-A1- 1 270 188
- US-A1- 2007 015 850

## Description

The present invention is related to a puncture sealing agent based on recycled rubber and having an excellent sealing performance for use in a puncture repair system.

In tire puncture repair systems, a puncture sealing agent is used for sealing punctures in pneumatic tires. The puncture sealing agent is a liquid comprising a solid dispersion and is injected into a damaged tire. The tire is then filled with air with the aid of a compressor and can be used to travel in that condition. When traveling, the puncture sealing agent is shaken within the tire, and as a result, the solid content of the dispersion is deposited to cover the puncture hole.

In recent years the required level of performance for puncture sealing agents has increased. Most of the efforts have been put into improving the sealant performance, injectability, and/or the applicability in low-temperature environments while maintaining ideal storage performance.

Furthermore, the increasing popularity of tubeless bicycle tires for different bike types, such as electric bicycles (e-bikes), mountain bikes or cargo bikes, has led to surging demand for puncture sealing agents which are optimized for such tires. On the other hand, many bicycles, but also other vehicles such as bicycle trailers or children's bicycles, are still equipped with tires having inner tubes. However, having to purchase, store, and/or carry with oneself different specialized sealing agents for different vehicles (for example, one for the bicycle and another one for the bicycle trailer) is cumbersome to the user. Therefore, a need exists for a sealing agent which is capable of sealing punctures in tubeless tires as well as in tires having an inner tube.

Puncture sealing agents contain usually synthetic components for improving the sealing performance, injectability and/or the applicability in low-temperature environments while maintaining ideal storage performance. However, using synthetic components is not resource-saving and environmentally friendly. In addition, there is room for improving the sealing properties of puncture sealing agents having sufficient low-temperature injectabilities.

Puncture sealing agents which are free of synthetic components are also known. However, these sealants are based on natural rubber latex. For example, a puncture sealing agent is described in JP 2015-98538 A, wherein natural rubber is contained in an amount such that the solid content derived from natural rubber is 25% by weight, based on the total weight of the puncture sealant agent, together with a rosin resin having a softening point of 90°C and propane-1,3-diol. In US 2015/0175862 A1, a further puncture sealing agent is described which contains a natural rubber latex, propane-1,3-diol and a resin emulsion as tackifier, such as a terpene resin. However, there remains room for improvement with regard to low-temperature injectability and seal retention performance.

Moreover, natural rubber latex is expensive and is available in limited quantities, since it is only produced by rubber plantations in a small number of countries, in particular India, Malaysia, Indonesia and Thailand. On the other hand, scrap rubber, which mostly originates from used tires, is an abundant raw material. It is estimated that annually at least one billion waste tires are disposed of worldwide. Replacing rubber latex with a significantly cheaper raw material such as recycled scrap rubber would therefore be highly desirable from an economic point of view. The use of recycled rubber would also help to tackle the global waste problem posed by the large amounts of scrap tires discarded each year. Furthermore, the sustainability of natural rubber production has been called into question owing to the conversion of tropical rainforest areas to rubber plantations. Consequently, reducing or avoiding the use of non-recycled (fresh) natural rubber and replacing it with recycled rubber would also be advantageous from an ecological point of view.

Reclaimed or recycled tire rubber can be used in conjunction with waterproofing membranes, to ensure product quality, but also to significantly reduce the cost of raw materials. Especially styrene-butadiene copolymers (SBS) that provide these membranes with the required flexibility at low and high temperatures, can be partially or fully replaced by recycled tire rubber. The recycled rubber is mixed with bitumen in a dispersion form at high temperatures and then applied onto a suitable membrane. Recycled tire rubber is also known for its use in asphalt production.

Puncture sealing agents comprising a recycled rubber, an adhesive agent, and an antifreeze agent are described in US 2007/015850 A1 and in EP 1 270 188 A1.

In view of the above, the object underlying the present invention is to provide a puncture sealing agent which is resource-saving, environmentally friendly and has a sealing performance, injectability, and applicability in low-temperature environments comparable or superior to conventionally used puncture sealing agents based on synthetic components, while being capable of sealing punctures in both tubeless tires and tires having an inner tube.

In accordance with the present invention, this object is achieved by a puncture sealing agent according to claim 1.

This solution is based on the surprising finding that, by combining in a puncture sealing agent at least 0.25% by weight of a recycled rubber, at least 15% by weight of an adhesive agent, and an antifreeze agent, a puncture sealing agent can be obtained which is at least primarily based on natural and recycled components and therefore resource-saving and environmentally friendly. It was found that such a puncture sealing agent provides excellent sealing performance, injectability and applicability in both low-temperature and high-temperature environments. In particular, it was found that injection of such a puncture sealing agent into a tire is even possible when using only a manually operated air pump, such as a bicycle air pump, thus eliminating the need for a compressor and allowing, for instance, the use of the sealing agent for emergency repairs of punctured bicycle tires. Moreover, it was found that the puncture sealing agent can also be used for preventing punctures in tires by injecting it into a tire which is still intact. It was further discovered that the sealing agent can be used for the repair or prevention of punctures in tubeless tires as well as in tires having an inner tube. Furthermore, it was found that a puncture sealing agent according to the present invention has a long shelf-life. In addition, it is possible to significantly reduce the costs for the puncture sealing agent, since the use of non-recycled synthetic resins can be reduced or completely avoided, particularly when natural adhesive agents, such as plant-based adhesive agents, and more particularly when carbohydrates are used as adhesive agents. Accordingly, it is possible to reduce or even avoid the use of dangerous compounds and additives. Moreover, disposal of the puncture sealing agent according to the invention after expiry is easy and non-dangerous.

Preferably, the puncture sealing agent according to the present invention is a bicycle tire puncture sealing agent.

Another aspect of the present invention is the use of the puncture sealing agent according to the present invention for repairing punctured tubeless tires, preferably punctured tubeless bicycle tires.

Another aspect of the present invention is the use of the puncture sealing agent according to the present invention for repairing punctured tires having an inner tube, preferably punctured bicycle tires having an inner tube.

A further aspect of the present invention is the use of the puncture sealing agent according to the present invention for preventing punctures in tubeless tires, preferably in tubeless bicycle tires.

A further aspect of the present invention is the use of the puncture sealing agent according to the present invention for preventing punctures in tires having an inner tube, preferably in bicycle tires having an inner tube.

Preferred embodiments of the present invention are the subject-matter of dependent claims and described subsequently along with further preferred embodiments which are not expressly mentioned in the dependent claims.

In the present description, the term "particle size distribution" refers to the particle size distribution as determined by laser diffraction in accordance with ISO standard 13320:2020, "Particle size analysis - Laser diffraction methods", published in 2020. For example, the particle size distribution may be measured using a Coulter LS200 instrument produced by Beckman Coulter, Inc., USA.

The puncture sealing agent of the present invention is preferably free of non-recycled (fresh) natural rubber (NR), in particular free of natural rubber latex, or free of any non-recycled (fresh) synthetic rubber, in particular free of any synthetic rubber latex, such as polyisoprene rubber (IR) latex, styrene-butadiene rubber (SBR) latex, polybutadiene rubber (BR) latex, butyl rubber (IIR) latex, chlorobutyl rubber (CIIR) latex, bromobutyl rubber (BIIR) latex, acrylonitrile-butadiene rubber (NBR) latex, chloroprene rubber latex (CIIR), or ethylene propylene diene rubber (EPDM) latex. More preferably, the puncture sealing agent of the present invention is free of both non-recycled natural rubber and non-recycled synthetic rubber.

The recycled rubber is preferably a ground recycled rubber, i.e. a recycled rubber obtained by grinding scrap rubber. More preferably, the recycled rubber is a ground recycled tire rubber obtained by grinding scrap tires after removal of non-rubber components such as steel wires or fibers therefrom. Even more preferably, said grinding is an ambient grinding process or a cryogenic grinding process. In an ambient grinding process, tire rubber is mechanically cut and ground into particles of the desired size at or above room temperature. In a cryogenic grinding process, pre-ground rubber is cooled below its glass transition temperature, e.g. by contacting it with liquid nitrogen. The frozen, embrittled rubber is then fractured and crushed. The recycled rubber may also be a combination of a plurality of recycled tire rubbers obtained by an ambient grinding process, a combination of a plurality of recycled tire rubbers obtained by a cryogenic grinding process, or a combination of one or more recycled tire rubbers obtained by an ambient grinding process with one or more recycled tire rubbers obtained by a cryogenic process. Since the rubber present in the puncture sealing agent of the present invention is a recycled rubber, the components of the puncture sealing agent can be based on natural and recycled raw materials and therefore the puncture sealing agent can be resource-saving and environmentally friendly. Furthermore, by employing recycled rubber and preferably natural adhesives, more preferably plant-based adhesives, even more preferably carbohydrates as adhesive agents, it is possible to avoid the addition of non-recycled synthetic resins, and to obviate the use and the release of potentially noxious compounds. Hence, the use as well as the disposal of the puncture sealing agent according to the invention is easy and non-dangerous.

The origin of the ground recycled tire rubber is not particularly limited. The ground recycled tire rubber may, for example, be obtained from treads, sidewalls, inner liners or any other rubber parts found in scrap tires. The ground recycled tire rubber may, for example, be obtained from scrap automobile tires, motorcycle tires, bicycle tires, heavy-duty tires such as truck or bus tires, or any other scrap tires from which ground recycled tire rubber can be obtained. Therefore, the rubber contained in the ground recycled tire rubber may comprise any rubber that is conventionally used to manufacture tire components, such as styrene-butadiene rubber (SBR), polybutadiene rubber (BR), natural rubber (NR), butyl rubber (IIR), polyisoprene rubber (IR), and the like.

The recycled rubber is present in the puncture sealing agent in an amount of at least 0.25% by weight, more preferably at least 0.5% by weight, even more preferably at least 0.75% by weight, and most preferably at least 1.0% by weight, based on the total weight of the puncture sealing agent. If less than 0.25 % by weight of recycled rubber is contained in the puncture sealing agent, there is a risk that sealing of the puncture in the tire is insufficient or too slow and that the sealing performance is deteriorated. Additionally, the recycled rubber is preferably present in the puncture sealing agent in an amount of 20% by weight or less, more preferably 10% by weight or less, even more preferably 5% by weight or less, and most preferably 3% by weight or less, based on the total weight of the puncture sealing agent. With the amount of rubber latex being less than 20% by weight, good injectability and storage performance as well as applicability in low-temperature environments can be obtained. It is to be understood that, based on the total weight of the puncture sealing agent, the recycled rubber is preferably present in the puncture sealing agent in an amount of 0.25% to 20% by weight, more preferably in the range of 0.50% to 10% by weight, even more preferably in the range of 0.75% to 5%, and most preferably in the range of 1% to 3% by weight, based on the total weight of the puncture sealing agent. However, also ranges of 0.25% to 10% by weight, 0.50% to 20% by weight, 1.0% to 10% by weight, as well as other ranges resulting from other combinations of the upper and lower limits mentioned above constitute preferred embodiments of the present invention. When the recycled rubber is present in an amount which is within the ranges described above, the above-mentioned effects can be advantageously achieved. However, it is also possible to have the amount of recycled rubber outside the above indicated ranges.

The recycled rubber preferably has a particle size distribution d₉₀ of 2000 µm or less, more preferably 1500 µm or less, even more preferably 1000 µm or less, most preferably 800 µm or less. Additionally, the recycled rubber has a particle size distribution d₉₀ of preferably at least 10 µm, more preferably at least 50 µm, even more preferably at least 100 µm, most preferably at least 200 µm. It is to be understood that the recycled rubber has a particle size distribution d₉₀ which is preferably in the range of 10 µm to 2000 µm, more preferably in the range of 50 µm to 1500 µm, even more preferably in the range of 100 to 1000 µm, most preferably in the range of 200 µm to 800 µm. However, also ranges of 10 µm to 1500 µm, 50 µm to 2000 µm, 200 µm to 1500 µm, 100 µm to 800 µm, 200 to 1000 µm, as well as other ranges resulting from other combinations of the upper and lower limits mentioned above constitute preferred embodiments of the present invention. With the particle size distribution of the recycled rubber being within the ranges described above, the effects of the present invention can be better achieved.

The adhesive agent is not particularly limited and may be selected from natural adhesives, such as animal-based adhesives and/or plant-based adhesives, synthetic adhesives, and any mixtures thereof. From the viewpoint of obtaining a sustainable product having low toxicity, it is preferable to use one or more animal-based adhesives, one or more plant-based adhesives, or any mixtures thereof. Examples of said animal-based adhesives include, but are not limited to, egg-based adhesives, such as egg albumen adhesive; milk-based adhesives, such as casein adhesives, which may be rennet casein, acid casein precipitated with organic acids such as lactic acid, citric acid, acetic acid, tartaric acid or the like, or with mineral acids such as hydrochloric acid or sulfuric acid, a caseinate, wherein the cation in the caseinate may be sodium, potassium, ammonium, calcium, magnesium, or any combinations thereof; and collagen-based adhesives, such as hydrolyzed collagen obtained from the skin, fins or bones of fish and hydrolyzed collagen obtained from the hides, connective tissue, cartilage or bones of animals, in particular of cattle, pigs or poultry. From the viewpoint of enhanced sustainability, the adhesive agent more preferably consists of a plant-based adhesive agent or of a mixture of a plurality of plant-based adhesive agents. Examples of the plant-based adhesives include, but are not limited to, rosin and/or rosin derivatives, such as gum rosin, wood rosin, tall oil rosin, rosin esters, rosin salts, hydrogenated rosins, and polymerized rosins; gum arabic, such as the gum obtained from trees of the species *Vachellia seyal* and/or from trees of the species *Senegalia senegal*; plant proteins, examples of which include, but are not limited to, soybean, rapeseed/canola, cottonseed, linseed, lupine, peanut, safflower, sunflower, wheat, corn/maize, oats, rice and rye proteins, among which soybean, rapeseed/canola, lupine, cottonseed and wheat proteins are particularly suitable; and carbohydrates. Even more preferably, the adhesive agent consists of one or more rosins and/or rosin derivatives, one or more types of gum arabic, one or more plant proteins, one or more carbohydrates, or any mixture thereof. Most preferably, the adhesive agent consists of one or more rosins and/or rosin derivatives, one or more plant proteins, one or more carbohydrates, or any mixture thereof, wherein it is particularly preferred when the adhesive agent consists of one or more plant proteins, one or more carbohydrates, or any mixtures thereof, wherein the most highly preferred adhesive agent consists of one or more carbohydrates.

When the adhesive agent in the puncture sealing agent of the present invention is a mixture of natural and synthetic adhesives, the content of natural adhesives, such as animal-based adhesives and/or plant-based adhesives, based on 100% by mass of the total adhesive agent, is preferably 50% by mass or more, more preferably 75% by mass or more, even more preferably 90% by mass or more, and most preferably 95% by mass or more, with a content of 99% by mass or more being particularly preferred.

The carbohydrate, if contained in the puncture sealing agent of the present invention, may comprise one or more monosaccharides, one or more disaccharides, one or more oligosaccharides, one or more polysaccharides, or a mixture thereof. Preferably, the carbohydrate comprises one or more monosaccharides, one or more disaccharides, one or more oligosaccharides, or a mixture thereof. More preferably, the carbohydrate consists of one or more monosaccharides, one or more disaccharides, one or more oligosaccharides, or a mixture thereof. Even more preferably, the carbohydrate consists of one or more monosaccharides, one or more disaccharides or a mixture thereof. Most preferably, the carbohydrate consists of one or more disaccharides, wherein it is particularly preferred when the carbohydrate consists of one disaccharide.

In the present specification, the term "oligosaccharides" refers to saccharides composed of 3 to 10 monosaccharide residues, and the term "polysaccharides" refers to saccharides composed of more than 10 monosaccharide residues, as defined by the IUPAC Recommendations 1995, published in Pure & Appl. Chem., Vol. 67, No. 8/9, pp. 1307-1375.

The one or more monosaccharides may be trioses, tetroses, pentoses, hexoses or heptoses, with hexoses and pentoses being particularly preferred. Some specific examples for monosaccharides are glycerinaldehyde, dihydroxyacetone, erythrose, threose, erythrulose, ribose, arabinose, xylose, lyxose, ribulose, xylulose, allose, altrose, gloxose, mannose, culose, idose, galactose, talose, psicose, fructose, glucose, fuculose, sorbose, tagatose, sedoheptulose, mannoheptulose, taloheptulose, alloheptulose, glucoheptose and mannoheptose. The one or more monosaccharides are preferably selected from fructose, galactose, glucose, mannose and xylose, more preferably from fructose and glucose.

Some specific examples for disaccharides include sucrose, lactulose, lactose, maltose, trehalose, cellobiose, chitobiose, kojibiose, nigerose, isomaltose, β,β-trehalose, α,β-trehalose, sophorose, laminaribiose, gentiobiose, turanose, maltulose, palatinose, gentiobiulose, mannobiose, melibiose, melibiulose, rutinose, rutinulose and xylobiose. The one or more disaccharides are preferably selected from cellobiose, lactose, maltose, sucrose and trehalose, more preferably from lactose, maltose and sucrose, even more preferably from lactose and sucrose. Most preferably, the disaccharide is sucrose.

In a preferable embodiment, hydrolysates of starch, for example glucose syrup and/or glucose-fructose syrup or dextrin are used as the carbohydrate, since when using these, the costs for the puncture sealing agent are reduced. Dextrin, glucose syrup and glucose-fructose syrup are liquid starch hydrolysates including mono-, di-, and oligosaccharides and can be made from any source of starch, for example from wheat, tapioca and potatoes. More preferably, the carbohydrate used is sucrose, glucose, fructose or a mixture of two or more of these. The use of sucrose is particularly preferred under the aspect of storage stability.

It is highly preferable that the puncture sealing agent according to the invention comprises at least one selected from the group consisting of sucrose, glucose, fructose and mixtures of two or more of these carbohydrates. Most preferably, the carbohydrate is sucrose.

In the puncture sealing agent according to the present invention, the carbohydrate is preferably included in the form of an aqueous solution, i.e. the carbohydrate is dissolved. To avoid precipitation of the carbohydrate in the puncture sealing agent, it is further preferable that the carbohydrate has a water solubility at 20°C of 100g/L or more, more preferably of 300 g/L or more.

In this regard, it is also preferable that, in the aqueous solution of the carbohydrate, the mass ratio (Zₐ:Z_{b}) of mass of carbohydrate (Zₐ) to mass of solvent (Z_{b}) is in the range of from 90:10 to 50:50, more preferably in the range of from 80:20 to 55:40 and even more preferably in the range of from 70:30 to 60:40. If the ratio is greater than 90:10, there is a risk that the viscosity of the aqueous solution of the carbohydrate is increased and that the injectability is deteriorated. However, if the ratio is below 50:50, the time for sealing a puncture may increase and the sealing performance may be deteriorated.

The amount of the adhesive agent contained in the puncture sealing agent can be varied in a broad range. The amount of adhesive agent contained in the puncture sealing agent is at least 15% by weight, even more preferably at least 20% by weight, most preferably at least 25% by weight, based on the total weight of the puncture sealing agent. Additionally, the amount of the adhesive agent contained in the puncture sealing agent is preferably 50% by weight or less, more preferably 45% by weight or less, even more preferably 40% by weight or less, most preferably 35% by weight or less, based on the total weight of the puncture sealing agent. It is to be understood that the amount of adhesive agent contained in the puncture sealing agent is preferably in the range of 15% to 50% by weight, more preferably in the range of 15% to 45% by weight, even more preferably in the range of 20% to 40% by weight, and most preferably in the range of 25% to 35% by weight, based on the total weight of the puncture sealing agent. However, also ranges of 15% to 45% by weight, 15% to 50% by weight, 25% to 45% by weight, as well as other ranges resulting from other combinations of the upper and lower limits mentioned above constitute preferred embodiments of the present invention. With the content of the adhesive agent being within the ranges described above, the effects of the present invention can be better achieved.

The weight ratio of the amount of the adhesive agent present in the puncture sealing agent to the amount of the recycled rubber present in the puncture sealing agent is preferably at least 1:1, more preferably at least 2:1, even more preferably at least 5:1, and most preferably at least 10:1. Additionally, the weight ratio of the amount of the adhesive agent present in the puncture sealing agent to the amount of recycled rubber present in the puncture sealing agent is preferably 100:1 or less, more preferably 50:1 or less, even more preferably 25:1 or less, and most preferably 20:1 or less. It is to be understood that the weight ratio of the amount of the adhesive agent present in the puncture sealing agent to the amount of recycled rubber present in the puncture sealing agent is preferably in the range of 1:1 to 100:1, more preferably in the range of 2:1 to 50:1, even more preferably in the range of 5:1 to 25:1, and most preferably in the range of 10:1 to 20:1. However, also ranges of 1:1 to 50:1, 2:1 to 100:1, 10:1 to 50:1, as well as other ranges resulting from other combinations of the upper and lower limits mentioned above constitute preferred embodiments of the present invention. With the weight ratio of the amount of the adhesive agent present in the puncture sealing agent to the amount of recycled rubber present in the puncture sealing agent being within the ranges described above, the effects of the present invention can be better achieved.

Besides the recycled rubber, the adhesive agent and the antifreeze agent, the puncture sealing agent of the present invention may preferably comprise one or more additional polymers. More preferably, said one or more additional polymers are one or more polysaccharides which are different from the adhesive agent. Even more preferably, said one or more polysaccharides which are different from the adhesive agent are selected from cellulose, cellulose derivatives, chitin, chitosan, starch, starch derivatives, and mixtures thereof. Most preferably, said one or more polysaccharides which are different from the adhesive agent are selected from cellulose, cellulose derivatives and mixtures thereof, with cellulose derivatives being particularly preferred among these.

When the puncture sealing agent contains, as an additional polymer, a polysaccharide that is different from the adhesive agent, and when the polysaccharide which is different from the adhesive agent is a cellulose derivative, it is preferable that said cellulose derivative is a degraded cellulose, a cellulose ester, a cellulose ether, an oxidized cellulose, or any combination thereof. Examples of said degraded cellulose include, but are not limited to, microcrystalline cellulose, cellulose nanocrystals, microfibrillated cellulose, and combinations thereof. Examples of said cellulose ether include, but are not limited to, carboxymethyl cellulose and salts thereof, carboxymethyl hydroxyethyl cellulose and salts thereof, carboxymethyl hydroxypropyl cellulose and salts thereof, carboxymethyl sulfoethyl cellulose and salts thereof, carboxymethyl sulfopropyl cellulose and salts thereof, methylol cellulose, hydroxyethyl cellulose, hydroxyethyl methyl cellulose, hydroxyethyl ethyl cellulose, hydroxyethyl sulfoethyl cellulose and salts thereof, hydroxypropyl cellulose, hydroxypropyl methyl cellulose, hydroxypropyl ethyl cellulose, hydroxypropyl sulfoethyl cellulose and salts thereof, sulfoethyl cellulose and salts thereof, sulfopropyl cellulose, or any combination thereof. More preferably, the cellulose derivative is microcrystalline cellulose, cellulose nanocrystals, a cellulose ether which contains a hydroxyalkyl ether moiety, or a combination thereof. Even more preferably, the cellulose derivative is microcrystalline cellulose, a cellulose ether which contains a hydroxyethyl ether moiety and/or a hydroxypropyl moiety, or any combination thereof. Most preferably, the cellulose derivative is microcrystalline cellulose, hydroxyethyl methyl cellulose, or a combination thereof.

If present, the puncture sealing agent of the present invention preferably comprises the one or more additional polymers in an amount of at least 0.05% by weight, more preferably at least 0.10% by weight, even more preferably at least 0.20% by weight, and most preferably at least 0.30% by weight, based on the total weight of the puncture sealing agent. Furthermore, the puncture sealing agent of the present invention preferably comprises the additional polymer in an amount of 5.0% by weight or less, more preferably 2.5% by weight or less, even more preferably 1.0% by weight or less, most preferably 0.70% by weight or less. It is to be understood that the amount of the one or more additional polymers contained in the puncture sealing agent is preferably in the range of 0.05% to 5.0% by weight, more preferably in the range of 0.10% to 2.5% by weight, even more preferably in the range of 0.20% to 1.0% by weight, and most preferably in the range of 0.30% to 0.70% by weight, based on the total weight of the puncture sealing agent. However, also ranges of 0.05% to 2.5% by weight, 0.10 to 5.0% by weight, 0.30% to 2.5% by weight, as well as other ranges resulting from other combinations of the upper and lower limits mentioned above constitute preferred embodiments of the present invention. With the content of the one or more additional polymers being within the ranges described above, the effects of the present invention can be better achieved. Where more than one additional polymer is contained in the puncture sealing agent, the weight percentages mentioned herein are to be understood as referring to the combined weight of the one or more additional polymers.

In view of enhanced sealing performance, it is preferred that the additional polymer is water-soluble, or, if the puncture sealing contains more than one additional polymer, that at least one of the additional polymers is water-soluble. As defined further below, in the context of the present application, "water-soluble" is to be understood as meaning "having a solubility of 1 g/L or more at 20°C". More preferably, the water-soluble additional polymer is a water-soluble polysaccharide. Examples of water-soluble polysaccharides include, but are not limited to, water-soluble starch derivatives and water-soluble cellulose derivatives. Even more preferably, the water-soluble polysaccharide is a water-soluble cellulose derivative. Most preferably, the water-soluble cellulose derivative is a water-soluble cellulose ether, with hydroxyalkyl cellulose ethers being particularly preferred.

When the puncture sealing agent comprises a water-soluble additional polymer, it is further preferable that the water-soluble additional polymer has a water solubility of at least 2 g/L at 20°C, more preferably at least 5 g/L at 20°C, even more preferably at least 10 g/L at 20°C, and most preferably at least 15 g/L at 20°C, with a solubility of at least 20 g/L at 20°C being particularly preferred. In the context of the present application, a water-soluble material is to be understood as a material which, at 20 °C, has a solubility in water of 1 g/L or more, as determined according to the OECD Guidelines for Testing of Chemicals, Section 1, Test Guideline No. 105: Water Solubility, adopted on July 27, 1995. In the context of the present application, a water-insoluble material is therefore to be understood as a material which, at 20 °C, has a solubility in water of less than 1 g/L, as determined according to the OECD Guidelines for Testing of Chemicals, Section 1, Test Guideline No. 105: Water Solubility, adopted on July 27, 1995.

Besides the recycled rubber, the adhesive agent and the optional additional polymer, the puncture sealing agent of the present invention comprises an antifreeze agent. Preferably, said antifreeze agent is an organic liquid, such as an alcohol, an ether or a mixture thereof. More preferably, the antifreeze agent is a polyhydric alcohol. Examples of said polyhydric alcohols include, but are not limited to, divalent alcohols (diols), trivalent alcohols (triols), and mixtures thereof. Even more preferably, the antifreeze agent is 1,2-propanediol, 1,3-propanediol, ethane-1,2-diol, glycerol, or a mixture thereof, with glycerol and 1,3-propanediol being particularly preferred among these. Most preferably, the antifreeze agent is glycerol, which is non-toxic and constitutes an important biomass derivative obtained as a by-product in the manufacture of biodiesel. Hence, the use of glycerol as the antifreeze agent facilitates the preparation of a biomass-derived, resource-saving and environmentally friendly puncture sealing agent which can be stored and handled safely. Moreover, the use of non-hazardous ingredients such as glycerol offers the further advantage that the packaging does not have to be provided with any chemical hazard pictograms, thus leading to increased consumer acceptance of the product.

The puncture sealing agent of the present invention preferably comprises the antifreeze agent in an amount of at least 5% by weight, more preferably at least 10% by weight, even more preferably at least 15% by weight, and most preferably at least 20% by weight, based on the total weight of the puncture sealing agent. Furthermore, the puncture sealing agent of the present invention preferably comprises the antifreeze agent in an amount of 45% by weight or less, more preferably 40% by weight or less, even more preferably 35% by weight or less, most preferably 30% by weight or less. It is to be understood that the amount of the antifreeze agent contained in the puncture sealing agent is preferably in the range of 5% to 45% by weight, more preferably in the range of 10% to 40% by weight, even more preferably in the range of 15% to 35% by weight, and most preferably in the range of 20% to 30% by weight, based on the total weight of the puncture sealing agent. However, also ranges of 5% to 40% by weight, 10 to 45% by weight, 20% to 40% by weight, as well as other ranges resulting from other combinations of the upper and lower limits mentioned above constitute preferred embodiments of the present invention. With the content of the antifreeze agent being within the ranges described above, the effects of the present invention can be better achieved. By adjusting the amount of antifreeze agent within the abovementioned ranges, the workability and stability of the puncture sealing agent at high and low temperatures can be adapted to consumers' needs.

From an ecological point of view, it is preferred that in the puncture sealing agent the recycled rubber, the adhesive agent, the optional one or more additional polymers and the antifreeze agent are natural or recycled components. In this regard, the combined content of all natural and all recycled components of the puncture sealing agent is more preferably equal to or greater than 90% by weight, even more preferably 95% by weight, based on the total mass of the puncture sealing agent. Most preferably, the puncture sealing agent is free from any non-recycled synthetic resins, i.e. any synthetic polymers besides the recycled rubber. The low content or preferably absence of non-recycled synthetic resin in the puncture sealing agent allows for a resource-saving and environmentally friendly puncture sealing agent which can be easily used and disposed of. In the context of this application, the term "natural component" refers to compounds and derivatives of compounds that can be found in nature and are not petroleum-derived, i.e. the term includes compounds that can be found in nature but which have been modified for example by a chemical reaction. Usually, synthetic resins are petroleum-derived resins.

Optionally, the puncture sealing agent may also comprise one or more colouring agents, e.g. to improve its visibility and aesthetic appearance, or to facilitate distinction from other products. If the puncture sealing agent comprises a colouring agent, the colouring agent is preferably a natural compound. More preferably, the colouring agent is a non-toxic natural compound. The one or more non-toxic natural colouring agents may include natural organic compounds as well as inorganic pigments derived from naturally occurring minerals. Examples of non-toxic natural organic colouring agents which may be present in the puncture sealing agent include, but are not limited to, anthocyanins (E163), betanin (E162), canthaxanthin (E161g), carotene (E160a), bixin/norbixin (E160b), capsanthin (E160c), lycopene (E160d), apocarotenal (E160e), chlorophyll (E140), chlorophyllin (E141), curcumin (E100), carmine (E120), lutein (E161b), riboflavin (E101), and combinations thereof. Examples of non-toxic inorganic pigments include, but are not limited to, iron oxide pigments, zinc pigments such as zinc white and zinc ferrite, titanium pigments such as titanium white, and combinations thereof. Even more preferably, the colouring agent is a non-toxic natural organic compound because, in this case, the colouring agent is obtainable entirely from renewable sources and may have better solubility in the puncture sealing agent. Herein, the amount of the colouring agent(s) in the puncture sealing agent is not particularly limited, and may be freely adjusted by the skilled person until the desired coloration is achieved.

In the context of the present application, the term "non-toxic" is to be understood as meaning "not classified within any of the four acute toxicity hazard categories I to IV of the Globally Harmonized System of Classification and Labelling of Chemicals (GHS), Eighth Revised Edition, United Nations 2019, due to having, or being anticipated to have, an oral or dermal LD₅₀ in test animals of at least 2000 mg/kg of body weight."

Besides the recycled rubber, the adhesive agent, the optional additional polymer and the antifreeze agent, the puncture sealing agent according to the present invention preferably comprises water. The water is preferably present in an amount of at least 25% by weight, more preferably at least 30% by weight, even more preferably at least 35% by weight, and most preferably at least 40% by weight, based on the total weight of the puncture sealing agent. Furthermore, the puncture sealing agent of the present invention preferably comprises the water in an amount of 60% by weight or less, more preferably 55% by weight or less, even more preferably 50% by weight or less, most preferably 45% by weight or less. It is to be understood that the amount of the water contained in the puncture sealing agent is preferably in the range of 25% to 60% by weight, more preferably in the range of 30% to 55% by weight, even more preferably in the range of 35% to 50% by weight, and most preferably in the range of 40% to 45% by weight, based on the total weight of the puncture sealing agent. However, also ranges of 25% to 55% by weight, 30 to 60% by weight, 40% to 55% by weight, as well as other ranges resulting from other combinations of the upper and lower limits mentioned above constitute preferred embodiments of the present invention. With the content of the water being within the ranges described above, the effects of the present invention can be better achieved.

It is noted that the above described features of the puncture sealing agent can of course be combined with each other to give preferred embodiments of the invention. Accordingly, in preferred embodiments of the invention, the compounds and the value ranges for the compounds described above are independently chosen and combined with each other. This results in a large number of possible embodiments representing the invention, only a few of which are explicitly mentioned. The skilled person understands that it is possible to combine the subsequently mentioned preferred embodiments with each other and with the features described above.

Accordingly, one preferred exemplary embodiment of the puncture sealing agent, based on the total weight of the puncture sealing agent, comprises 10% to 50% by weight of the carbohydrate, 0.25% to 20% by weight of the recycled rubber, 0.05% to 5.00% by weight of the additional polymer and 5% to 45% by weight of the antifreeze agent, wherein the recycled rubber is a ground recycled tire rubber, and wherein the additional polymer is a polysaccharide which is different from the carbohydrate.

**In** another preferred exemplary embodiment, the carbohydrate is selected from the group consisting of sucrose, glucose, fructose and mixtures of two or more of these carbohydrates and the antifreeze agent is at least one selected from the group consisting of glycerol, ethylene glycol, propane-1,2-diol, propane-1,3-diol and mixtures thereof.

According to a further preferred exemplary embodiment, the puncture sealing agent comprises, based on 100 % by weight of the puncture sealing agent, recycled rubber in an amount of 10% by weight or less, and 2.5% by weight or less of an additional polymer, wherein the additional polymer is at least one polysaccharide which is different from the carbohydrate, preferably cellulose or a cellulose derivative.

According to a further preferred exemplary embodiment, in the puncture sealing agent, based on 100% by weight of the puncture sealing agent, the amount of ground recycled tire rubber is 5.0% by weight or less, and, also based on 100% by weight of the puncture sealing agent, the amount of carbohydrate is 25% by weight or more, wherein it is even more preferable that the carbohydrate is a monosaccharide, a disaccharide, an oligosaccharide or a mixture thereof, and further preferably, the carbohydrate is selected from the group consisting of sugars and degraded starches.

In another preferred exemplary embodiment, in the puncture sealing agent, based on 100% by weight of the puncture sealing agent, the amount of carbohydrate is 25% by weight or more and the carbohydrate is a disaccharide or an oligosaccharide, in particular a disaccharide, for example sucrose.

According to a further preferred exemplary embodiment, the puncture sealing agent comprises, based on 100% by weight of the puncture sealing agent, ground recycled tire rubber in an amount of 0.5 to 5.0% by weight, and the carbohydrate is at least one having a solubility in water of 100g/L or more at a temperature of 20°C.

In a further preferred exemplary embodiment, the puncture sealing agent comprises the antifreeze agent, based on 100% by weight of the puncture sealing agent, in an amount of 20% by weight or more, wherein the antifreeze agent is at least one of ethylene glycol, propylene glycol, propane-1,3-diol and glycerol, and wherein the carbohydrate is at least one of sucrose, fructose and dextrin.

According to another preferred exemplary embodiment, the additional polymer is one or more polysaccharides which are different from the carbohydrate, the additional polymer being present in an amount of 0.05% by weight or more per 100% by weight of the puncture sealing agent, the recycled rubber is ground recycled tire rubber obtained by grinding scrap tires in an ambient grinding process or in a cryogenic grinding process and is present in an amount of 1.0% by weight or more per 100% by weight of the puncture sealing agent and preferably has a particle size distribution d₉₀ of 75 µm, the antifreeze agent is glycerol or 1,3-propanediol and is present in amount of 15 to 35% by weight per 100% by weight of the puncture sealing agent, and the carbohydrate is fructose, glucose or sucrose, the carbohydrate being present in an amount of 5 to 45% by weight per 100% by weight of the puncture sealing agent.

According to another preferred exemplary embodiment, the additional polymer is one or more polysaccharides which are different from the carbohydrate and which are selected from cellulose, cellulose derivatives, chitin, chitosan, starch, starch derivatives, and mixtures thereof, the additional polymer being present in an amount of 0.10 to 5% by weight per 100% by weight of the puncture sealing agent, the recycled rubber is a ground recycled tire rubber obtained by grinding scrap tires in an ambient grinding process or in a cryogenic grinding process, the recycled tire rubber being present in an amount of 0.75 to 5% by weight per 100% by weight of the puncture sealing agent and preferably having a particle size distribution d₉₀ of at least 50 µm, the carbohydrate is selected from fructose, galactose, glucose, mannose, xylose, sucrose, cellobiose, lactose, maltose, sucrose, trehalose, glucose syrup, glucose-fructose syrup, or mixtures thereof, the carbohydrate being present in an amount of 20% to 50% by weight per 100% by weight of the puncture sealing agent, and the antifreeze agent is 1,2-propanediol, 1,3-propanediol, ethane-1,2-diol, glycerol, or a mixture thereof, the antifreeze agent being present in an amount of 5 to 45% by weight per 100% by weight of the puncture sealing agent.

According to another preferred exemplary embodiment, the additional polymer is one or more polysaccharides which are different from the carbohydrate, said one or more polysaccharides being one or more cellulose derivatives selected from microcrystalline cellulose, cellulose nanocrystals, cellulose esters, cellulose ethers and mixtures thereof, the additional polymer being present in an amount of 0.20 to 2.50% by weight per 100% by weight of the puncture sealing agent, the recycled rubber is present in an amount of 0.5% to 10% by weight per 100% by weight of the puncture sealing agent, the carbohydrate is one or more selected from sugars and hydrolysates of starch and is present in an amount of 15% by weight or more per 100% by weight of the puncture sealing agent, and the antifreeze agent is selected from divalent alcohols, trivalent alcohols and mixtures thereof, the antifreeze agent being present in an amount of at least 5% by weight per 100% by weight of the puncture sealing agent.

According to another preferred exemplary embodiment, the additional polymer is one or more polysaccharides which are different from the carbohydrate, said one or more polysaccharides being selected from microcrystalline cellulose, cellulose ethers comprising a hydroxyethyl group, cellulose ethers comprising a hydroxypropyl group, and mixtures thereof, the additional polymer being present in an amount of 0.30 to 2.50% by weight per 100% by weight of the puncture sealing agent, the recycled rubber is present in amount of 0.5% by weight or more per 100% by weight of the puncture sealing agent, the carbohydrate is one or more selected from monosaccharides, disaccharides, and oligosaccharides, the carbohydrate being present in an amount of 10% by weight or more per 100% by weight of the puncture sealing agent, and the antifreeze agent is selected from one or more alcohols, one or more ethers, and mixtures thereof, the antifreeze agent being present in an amount of 45% by weight or less per 100% by weight of the puncture sealing agent.

According to yet another preferred exemplary embodiment, the puncture sealing agent comprises microcrystalline cellulose or a water-soluble hydroxyalkyl cellulose ether in an amount of at least 0.2 weight-% per 100 weight-% of the puncture sealing agent, the weight ratio of the amount of the carbohydrate present in the puncture sealing agent to the amount of recycled rubber present in the puncture sealing agent is in the range of 2:1 to 50:1, and the combined content of all natural and recycled components of the puncture sealing agent is 95% or more per 100 weight-% of the puncture sealing agent.

According to yet another preferred exemplary embodiment, the puncture sealing agent comprises a water-soluble cellulose ether which has a water solubility of at least 5 g/L at 20°C or microcrystalline cellulose in an amount of 0.1 to 2.5 weight-% per 100 weight-% of the puncture sealing agent, and an optional coloring agent, the weight ratio of the amount of the carbohydrate present in the puncture sealing agent to the amount of recycled rubber present in the puncture sealing agent being in the range of 1:1 to 100:1, preferably 10:1 to 25:1, wherein the puncture sealing agent is preferably free of non-recycled synthetic resins and non-recycled natural rubber.

According to yet another preferred exemplary embodiment, the puncture sealing agent comprises microcrystalline cellulose or a water-soluble polysaccharide in an amount of at least 0.05 weight-% per 100 weight-% of the puncture sealing agent, and optionally, a coloring agent selected from natural organic compounds and natural inorganic pigments, the weight ratio of the amount of the carbohydrate present in the puncture sealing agent to the amount of recycled rubber present in the puncture sealing agent being in the range of 2:1 to 25:1, and the combined content of all natural and recycled components of the puncture sealing agent being 90% or more.

According to yet another preferred exemplary embodiment, the recycled rubber is ground recycled tire rubber obtained by grinding scrap tires in an ambient grinding process or in a cryogenic grinding process and is present in an amount of 0.25% to 20% by weight per 100% by weight of the puncture sealing agent, the carbohydrate is selected from monosaccharides, disaccharides, oligosaccharides and mixtures thereof and is present in an amount of 10% to 50% by weight per 100% by weight of the puncture sealing agent, the additional polymer is a water-soluble polysaccharide which is present in an amount of 0.05 to 5.00 % by weight per 100% by weight of the puncture sealing agent, the antifreeze agent is selected from one or more alcohols, one or more ethers, and mixtures thereof, and is present in an amount of 5 to 45% by weight per 100% by weight of the puncture sealing agent, the combined content of all natural and recycled components of the puncture sealing agent being 95% or more.

According to yet another preferred exemplary embodiment, the recycled rubber is a ground recycled tire rubber, the particle size distribution d₉₀ of the ground recycled tire rubber being between 50 µm and 1500 µm, the carbohydrate is a monosaccharide or disaccharide, has a water solubility at 20°C of 300 g/L or more and is present in an amount of 20 weight-% or more per 100 weight-% of the puncture sealing agent, the additional polymer is a water-soluble cellulose derivative which is present in an amount of 0.10 to 2.50 weight-% per 100 weight-% of the puncture sealing agent and has a water solubility of at least 5 g/L at 20°C, the antifreeze agent is a polyhydric alcohol which is present in an amount of 10 to 40 weight-% per 100 weight-% of the puncture sealing agent, the weight ratio of the amount of the carbohydrate present in the puncture sealing agent to the amount of recycled rubber present in the puncture sealing agent being in the range of 2:1 to 100:1,and the combined content of all natural and recycled components of the puncture sealing agent is 90% or more per 100 weight-% of the puncture sealing agent, wherein the puncture sealing agent optionally comprises a natural, non-toxic coloring agent.

According to yet another preferred exemplary embodiment, the recycled rubber is ground recycled tire rubber obtained by grinding scrap tires in an ambient grinding process or in a cryogenic process and is present in an amount of 0.75 to 5 weight-% per 100 weight-% of the puncture sealing agent, the particle size distribution d₉₀ of the ground recycled tire rubber being 75 µm or more, the carbohydrate is selected from dextrin, glucose syrup, glucose-fructose syrup, fructose, glucose, lactose, maltose, sucrose and mixtures thereof and is present in an amount of 25 weight-% or more per 100 weight-% of the puncture sealing agent, the antifreeze agent is selected from 1,2-propanediol, 1,3-propanediol, ethane-1,2-diol, glycerol or a mixture thereof and is present in an amount of 10 to 40 weight-% per 100 weight-% of the puncture sealing agent, the additional polymer is a water-soluble cellulose ether which has a water solubility of at least 10 g/L at 20°C and is present in an amount of at least 0.10 weight-% per 100 weight-% of the puncture sealing agent, and the puncture sealing agent is preferably free of non-recycled synthetic resins and free of non-recycled natural rubber.

According to yet another preferred exemplary embodiment, the puncture sealing agent consists of one or more recycled rubbers, one or more carbohydrates, one or more additional polymers, one or more antifreeze agents, water and, optionally, one or more colouring agents.

According to yet another preferred exemplary embodiment, the adhesive agent in the puncture sealing agent includes of one or more rosins and/or rosin derivatives, one or more types of gum arabic, one or more plant proteins, one or more carbohydrates, or any mixture thereof, in an amount of 75% by mass or more, based on 100% by mass of the total adhesive agent.

According to yet another preferred exemplary embodiment, the adhesive agent in the puncture sealing agent includes one or more plant-based adhesives which preferably consist of one or more carbohydrates, in an amount of 90% by mass or more, based on 100% by mass of the total adhesive agent.

The puncture sealing agent according to the present invention can be used for repairing and/or preventing punctures in tires equipped with a Schrader valve, a Sclaverand valve (also known as Presta valve), or a Dunlop valve. The puncture sealing agent is preferably used in tires equipped with a Schrader valve or a Dunlop valve because in this case, the sealing agent can be injected into the tires directly through the valve, without the need for an adapter. However, the puncture sealing agent of the present invention can also be injected into a tire equipped with a Sclaverand/Presta valve, provided that a suitable adapter is used.

The puncture sealing agent according to the present invention can be used for repairing and/or preventing punctures in tubeless tires and in tires having an inner tube, wherein the tubeless tires and the tires having an inner tube are preferably tires for bicycles and bicycle trailers. Particularly preferred examples of the bicycles include electric bicycles, children's bicycles, cargo bicycles, and mountain bikes.

According to a preferred exemplary embodiment, the puncture sealing agent of the present invention is used for repairing and/or preventing punctures in a tubeless bicycle tire, preferably in a tubeless children's bicycle tire, a tubeless electric bicycle tire, a tubeless cargo bicycle tire or a tubeless mountain bike tire, more preferably in a tubeless electric bicycle tire.

According to another preferred exemplary embodiment, the puncture sealing agent of the present invention is used for repairing and/or preventing punctures in a bicycle tire having an inner tube, wherein the bicycle tire having an inner tube is preferably a children's bicycle tire, an electric bicycle tire, a cargo bicycle tire or a mountain bike tire, more preferably an electric bicycle tire.

According to yet another preferred exemplary embodiment, the puncture sealing agent of the present invention is used for repairing punctured tubeless electric bicycle tires, tubeless cargo bicycle tires, or tubeless mountain bike tires, preferably punctured tubeless electric bicycle tires or tubeless mountain bike tires, more preferably punctured tubeless electric bicycle tires.

According to yet another preferred exemplary embodiment, the puncture sealing agent of the present invention is used for repairing punctured tires having an inner tube, wherein said punctured tires having an inner tube are electric bicycle tires, cargo bicycle tires, mountain bike tires or children's bicycle tires, preferably electric bicycle tires or mountain bike tires, more preferably electric bicycle tires.

According to yet another preferred exemplary embodiment, the puncture sealing agent of the present invention is used for preventing punctures in tubeless electric bicycle tires, tubeless cargo bicycle tires, or tubeless mountain bike tires, preferably in tubeless electric bicycle tires or tubeless mountain bike tires, more preferably in tubeless electric bicycle tires.

According to yet another preferred exemplary embodiment, the puncture sealing agent of the present invention is used for preventing punctures in tires having an inner tube, wherein said tires having an inner tube are electric bicycle tires, cargo bicycle tires, mountain bike tires or children's bicycle tires, preferably electric bicycle tires or mountain bike tires, more preferably electric bicycle tires.

**Table 1: Puncture sealing compositions according to Examples 1 and 2**

| Component | Amount (weight-%) | |
|---|---|---|
| | Ex. 1 | Ex. 2 |
| Recycled tire rubber, d₉₀ = 100 to 1000 µm | 2 | 2 |
| Water | 43.25 | 43.25 |
| Sucrose | 29.25 | 29.25 |
| Hydroxyethyl methyl cellulose (Tylose MH, CAS 9032-42-2) | 0.50 | - |
| Microcrystalline cellulose (CAS 9004-34-6) | - | 0.50 |
| 1,3-Propanediol | 25 | 25 |

### Example 1

A puncture sealing agent according to the present invention was prepared by mixing a recycled rubber (recycled tire rubber, particle size distribution d₉₀ = 100 to 1000 µm), a carbohydrate (sucrose), an additional polymer (hydroxyethyl methyl cellulose), an antifreeze agent (1,3-propanediol), and water according to the formulation given in Table 1 above.

In order to check the injectability of the above formulation, it was injected into a tubeless bicycle tire through the valve of the tire at varying temperatures with the aid of a manually operated bicycle air pump, without using a compressor. It was found that, over a temperature range from -20°C to +50°C, the material could be injected into the tire without clogging the valve.

To test the sealing performance of the above composition in an emergency situation, a puncture tool was used to create a hole having a diameter of 3 mm in the tread portion of a tubeless bicycle tire. After pulling out the puncture tool, the puncture sealing agent according to the formulation above was injected through the tire valve using a manually operated bicycle air pump, and driving was simulated by spinning the wheel. After one minute of spinning, there was no more air leakage and the tire presented a tight status, i.e. no leakage was observed in the vicinity of the puncture hole.

To test the sealing performance of the above composition when it is used preventively, the formulation was injected into a tubeless bicycle tire through an air valve while the tire was still intact, using a manually operated bicycle air pump. Then, a puncture tool was used to create a hole having a diameter of 3 mm in the tread portion of the tire. After pulling out the puncture tool, driving was simulated by spinning the wheel. After one minute of spinning, there was no more air leakage and the tire presented a tight status, i.e. no leakage was observed in the vicinity of the puncture hole.

The composition was then subjected to sealing performance tests in a bicycle tire having an inner tube. To test the sealing performance in tires having an inner tube in an emergency situation, a puncture tool was used to create holes in two inner tubes for bicycle tires, one hole having a diameter of 3 mm and being situated in the tread portion of one inner tube, and the other hole having a diameter of 3 mm and being situated in the side section of another inner tube. After pulling out the puncture tool and placing each tube within a tire and on a wheel, the puncture sealing agent according to the formulation above was injected through the tire valve using a manually operated bicycle air pump, and driving was simulated by spinning the wheel. The puncture holes were sealed within ten minutes of spinning.

To test the sealing performance of the above composition when it is used preventively in a tire with an inner tube, the formulation was injected into two tires having an inner tube through an air valve while the tires and inner tubes were still intact, using a manually operated bicycle air pump. Then, a puncture tool was used to create holes in the two bicycle tires, one hole having a diameter of 3 mm and being situated in the tread portion of one tire, and the other hole having a diameter of 3 mm and being situated in the side section of the other tire. After pulling out the puncture tool, driving was simulated by spinning the wheel. The puncture holes were sealed within ten minutes of spinning.

To evaluate the storage properties, stability tests were perfomed causing the original state of the dispersion to change or at least to be stressed. The aging experiments with respect to preventive use were carried out as follows: The sealant was pumped inside an intact tire, as when used preventively. The tire together with the wheel rim and the sealant was then subjected to repeated +60/-25 °C cycles for 6 hours. Subsequently, the tire was stored for twenty days at room temperature (20°C). Throughout this period, the sealing agent remained liquid and did not solidify. Accordingly, it was found that the formulation can be stored between -25°C and +60°C. With respect to emergency applications, the shelf-life of the above-described formulation when not removed from its original bottle was determined as follows: Aging tests were performed using a LUMiSizer (available from LUM GmbH, Berlin, Germany) by analyzing particle and droplet velocity distributions for creaming and sedimentation phenomena and determining particle size (in conformity with ISO 13318-2:2007). After running a simulation using the LUMiSizer, the shelf life of the sealant within the bottle was estimated to be five years and three months (in conformity with ISO/TR 13097:2013). With respect to preventative applications, the period during which the formulation remains liquid when placed within the tire was estimated to be six months.

### Example 2

A puncture sealing agent according to the present invention was prepared as described above in Example 1, except that hydroxy ethyl methyl cellulose was replaced with the same amount of microcrystalline cellulose (CAS 9004-34-6). Injectability, sealing performance and storage properties were evaluated using the same methods as described above in Example 1 and were found to be equal to those observed with the composition containing hydroxyethyl methyl cellulose.

Examples 1 and 2 show that an environmentally friendly, resource-saving puncture sealing agent based on natural and recycled compounds according to the present invention can be injected into tubeless tires as well as tires having an inner tube over a broad temperature range from -20°C to +50°C to seal punctures having a size of up to 3 mm in both emergency and preventative applications. **In** each example, the puncture sealing agent can be injected using a manually operated air pump, such as a bicycle pump, without any need for a compressor, which is important in emergency situations. Moreover, the puncture sealing agent of Examples 1 and 2 is stable during storage, resulting in a long estimated shelf life of five years and three months. Examples 1 and 2 demonstrate that hydroxyethyl methyl cellulose and microcrystalline cellulose can be used interchangeably in the puncture sealing agent without negatively affecting performance.

## Claims

1. Puncture sealing agent, comprising
a recycled rubber, an adhesive agent, and an antifreeze agent,
wherein the amount of adhesive agent contained in the puncture sealing agent is at least 15% by weight, based on the total weight of the puncture sealing agent, and
the recycled rubber is present in the puncture sealing agent in an amount of at least 0.25% by weight, based on the total weight of the puncture sealing agent.

2. Puncture sealing agent according to claim 1,
wherein the recycled rubber is a recycled tire rubber, preferably a recycled tire rubber obtained by grinding scrap tires in an ambient grinding process and/or a recycled tire rubber obtained by grinding scrap tires in a cryogenic grinding process.

3. Puncture sealing agent according to claim 1 or 2,
wherein the recycled rubber is present in an amount of 0.25 to 20 weight-%, preferably 0.5 to 10 weight-%, more preferably 0.75 to 5 weight-% per 100 weight-% of the puncture sealing agent.

4. Puncture sealing agent according to any of the preceding claims,
wherein the recycled rubber has a particle size distribution d₉₀ of 10 µm to 2000 µm, preferably 50 µm to 1500 µm, more preferably 100 µm to 1000 µm, as determined by laser diffraction in accordance with ISO 13320:2020.

5. Puncture sealing agent according to any of the preceding claims,
wherein the adhesive agent is a plant-based adhesive, preferably a carbohydrate, more preferably a monosaccharide and/or a disaccharide and/or an oligosaccharide, even more preferably sucrose.

6. Puncture sealing agent according to any of the preceding claims,
wherein the adhesive agent is present in an amount of 15 to 50 weight-%, preferably 15 to 45 weight-%, more preferably 20 to 40 weight-% per 100 weight-% of the puncture sealing agent.

7. Puncture sealing agent according to any of the preceding claims,
wherein the puncture sealing agent comprises an additional polymer, in an amount of preferably 0.05 to 5 weight-%, more preferably 0.10 to 2.5 weight-%, even more preferably 0.20 to 1.0 weight-%, per 100 weight-% of the puncture sealing agent.

8. Puncture sealing agent according to claim 7,
wherein the additional polymer is a polysaccharide which is different from the adhesive agent, preferably cellulose and/or a cellulose derivative, more preferably microcrystalline cellulose, a cellulose ether containing a hydroxyethyl group, a cellulose ether containing a hydroxypropyl group, or a mixture thereof.

9. Puncture sealing agent according to claim 7,
wherein the additional polymer is water-soluble, preferably a water-soluble polysaccharide, more preferably a water-soluble cellulose ether.

10. Puncture sealing agent according to any of the preceding claims,
wherein the antifreeze agent is selected from one or more alcohols, one or more ethers, and mixtures thereof, preferably wherein the antifreeze agent is 1,2-propanediol, 1,3-propanediol, ethane-1,2-diol, glycerol, or a mixture thereof, more preferably wherein the antifreeze agent is 1,3-propanediol or glycerol, even more preferably wherein the antifreeze agent is glycerol.

11. Puncture sealing agent according to any of the preceding claims,
wherein the antifreeze agent is present in an amount of 5 to 45 weight-%, preferably 10 to 40 weight-%, more preferably 15 to 35 weight-% per 100 weight-% of the puncture sealing agent.

12. Puncture sealing agent according to any of the preceding claims,
wherein the total amount of natural and recycled compounds in the puncture sealing agent is 90 weight-% or more, preferably 95 weight-% or more per 100 weight-% of puncture sealing agent.

13. Puncture sealing agent according to any of the preceding claims,
wherein the puncture sealing agent is free of any non-recycled natural rubber and/or free of any non-recycled synthetic polymers.

14. Puncture sealing agent according to any of the preceding claims,
wherein the puncture sealing agent is a bicycle tire puncture sealing agent.

15. Use of the puncture sealing agent according to any of claims 1 to 13 for repairing punctured tubeless tires, for repairing punctured tires having an inner tube, for preventing punctures in tubeless tires, or for preventing punctures in tires having an inner tube, wherein said tires are preferably bicycle tires.

## Patentansprüche

1. Pannendichtmittel, umfassend
einen rezyklierten Kautschuk, ein Haftmittel und ein Gefrierschutzmittel,
wobei die Menge an Haftmittel, das in dem Pannendichtmittel enthalten ist, mindestens 15 Gewichts-% beträgt, bezogen auf das gesamte Gewicht des Pannendichtmittels, und
der rezyklierte Kautschuk in dem Pannendichtmittel in einer Menge von mindestens 0,25 Gewichts-% vorhanden ist, bezogen auf das gesamte Gewicht des Pannendichtmittels.

2. Pannendichtmittel nach Anspruch 1,
wobei der rezyklierte Kautschuk ein rezyklierter Reifenkautschuk ist, bevorzugt ein durch Mahlen von Altreifen in einem Mahlprozess unter Umgebungsbedingungen erhaltener rezyklierter Reifenkautschuk und/oder ein durch Mahlen von Altreifen in einem kryogenen Mahlprozess erhaltener rezyklierter Reifenkautschuk.

3. Pannendichtmittel nach Anspruch 1 oder 2,
wobei der rezyklierte Kautschuk in einer Menge von 0,25 bis 20 Gewichts-% vorhanden ist, bevorzugt 0,5 bis 10 Gewichts-%, bevorzugter 0,75 bis 5 Gewichts-% pro 100 Gewichts-% des Pannendichtmittels.

4. Pannendichtmittel nach einem der vorangehenden Ansprüche,
wobei der rezyklierte Kautschuk eine Partikelgrößenverteilung d₉₀ von 10 µm bis 2000 µm aufweist, bevorzugt 50 µm bis 1500 µm, bevorzugter 100 µm bis 1000 µm, wie durch Laserbeugung gemäß ISO 13320:2020 bestimmt.

5. Pannendichtmittel nach einem der vorangehenden Ansprüche,
wobei das Haftmittel ein pflanzenbasierter Klebstoff ist, bevorzugt ein Kohlenhydrat, bevorzugter ein Monosaccharid und/oder ein Disaccharid und/oder ein Oligosaccharid, noch bevorzugter Saccharose.

6. Pannendichtmittel nach einem der vorangehenden Ansprüche,
wobei das Haftmittel in einer Menge von 15 bis 50 Gewichts-% vorhanden ist, bevorzugt 15 bis 45 Gewichts-%, bevorzugter 20 bis 40 Gewichts-% pro 100 Gewichts-% des Pannendichtmittels.

7. Pannendichtmittel nach einem der vorangehenden Ansprüche,
wobei das Pannendichtmittel ein zusätzliches Polymer umfasst, in einer Menge von bevorzugt 0,05 bis 5 Gewichts-%, bevorzugter 0,10 bis 2,5 Gewichts-%, noch bevorzugter 0,20 bis 1,0 Gewichts-%, pro 100 Gewichts-% des Pannendichtmittels.

8. Pannendichtmittel nach Anspruch 7,
wobei das zusätzliche Polymer ein Polysaccharid ist, das von dem Haftmittel verschieden ist, bevorzugt Cellulose und/oder ein Cellulosederivat, bevorzugter mikrokristalline Cellulose, ein Celluloseether, der eine Hydroxyethylgruppe enthält, ein Celluloseether, der eine Hydroxypropylgruppe enthält, oder eine Mischung davon.

9. Pannendichtmittel nach Anspruch 7,
wobei das zusätzliche Polymer wasserlöslich ist, bevorzugt ein wasserlösliches Polysaccharid, bevorzugter ein wasserlöslicher Celluloseether.

10. Pannendichtmittel nach einem der vorangehenden Ansprüche,
wobei das Gefrierschutzmittel aus einem oder mehreren Alkoholen, einem oder mehreren Ethern und Mischungen davon ausgewählt ist, bevorzugt wobei das Gefrierschutzmittel 1,2-Propandiol, 1,3-Propandiol, Ethan-1,2-diol, Glycerin oder eine Mischung davon ist, bevorzugter wobei das Gefrierschutzmittel 1,3-Propandiol oder Glycerin ist, noch bevorzugter wobei das Gefrierschutzmittel Glycerin ist.

11. Pannendichtmittel nach einem der vorangehenden Ansprüche,
wobei das Gefrierschutzmittel in einer Menge von 5 bis 45 Gewichts-% vorhanden ist, bevorzugt 10 bis 40 Gewichts-%, bevorzugter 15 bis 35 Gewichts-% pro 100 Gewichts-% des Pannendichtmittels.

12. Pannendichtmittel nach einem der vorangehenden Ansprüche,
wobei die gesamte Menge an natürlichen und rezyklierten Verbindungen in dem Pannendichtmittel 90 Gewichts-% oder mehr beträgt, bevorzugt 95 Gewichts-% oder mehr pro 100 Gewichts-% an Pannendichtmittel.

13. Pannendichtmittel nach einem der vorangehenden Ansprüche,
wobei das Pannendichtmittel frei von jeglichem nicht-rezyklierten Naturkautschuk und/oder frei von jeglichen nicht-rezyklierten synthetischen Polymeren ist.

14. Pannendichtmittel nach einem der vorangehenden Ansprüche,
wobei das Pannendichtmittel ein Fahrradreifen-Pannendichtmittel ist.

15. Verwendung des Pannendichtmittels nach einem der Ansprüche 1 bis 13 zum Reparieren durchstochener schlauchloser Reifen, zum Reparieren durchstochener Reifen mit einem Innenschlauch, zum Verhindern von Pannen bei schlauchlosen Reifen oder zum Verhindern von Pannen bei Reifen mit einem Innenschlauch, wobei die Reifen bevorzugt Fahrradreifen sind.

## Revendications

1. Agent d'étanchéité de crevaison, comprenant
un caoutchouc recyclé, un agent adhésif, et un agent anticongélation,
dans lequel la quantité d'agent adhésif contenue dans l'agent d'étanchéité de crevaison est d'au moins 15 % en poids, sur la base du poids total de l'agent d'étanchéité de crevaison, et
le caoutchouc recyclé est présent dans l'agent d'étanchéité de crevaison en une quantité d'au moins 0,25 % en poids, sur la base du poids total de l'agent d'étanchéité de crevaison.

2. Agent d'étanchéité de crevaison selon la revendication 1,
dans lequel le caoutchouc recyclé est un caoutchouc de pneu recyclé, de préférence un caoutchouc de pneu recyclé obtenu en concassant des pneus de déchet dans un processus de concassage ambiant et/ou un caoutchouc de pneu recyclé obtenu en concassant des pneus de déchet dans un processus de concassage cryogénique.

3. Agent d'étanchéité de crevaison selon la revendication 1 ou 2,
dans lequel le caoutchouc recyclé est présent en une quantité de 0,25 à 20 % en poids, de préférence de 0,5 à 10 % en poids, davantage de préférence de 0,75 à 5 % en poids par 100 % en poids de l'agent d'étanchéité de crevaison.

4. Agent d'étanchéité de crevaison selon l'une quelconque des revendications précédentes,
dans lequel le caoutchouc recyclé a une distribution de taille de particule d₉₀ de 10 µm à 2 000 µm, de préférence de 50 µm à 1 500 µm, davantage de préférence de 100 µm à 1 000 µm, telle que déterminée par diffraction laser selon la norme ISO 13320:2020.

5. Agent d'étanchéité de crevaison selon l'une quelconque des revendications précédentes,
dans lequel l'agent adhésif est un adhésif à base de plante, de préférence un sucre, davantage de préférence un monosaccharide et/ou un disaccharide et/ou un oligosaccharide, encore davantage de préférence le saccharose.

6. Agent d'étanchéité de crevaison selon l'une quelconque des revendications précédentes,
dans lequel l'agent adhésif est présent en une quantité de 15 à 50 % en poids, de préférence de 15 à 45 % en poids, davantage de préférence de 20 à 40 % en poids par 100 % en poids de l'agent d'étanchéité de crevaison.

7. Agent d'étanchéité de crevaison selon l'une quelconque des revendications précédentes,
dans lequel l'agent d'étanchéité de crevaison comprend un polymère supplémentaire, en une quantité de préférence de 0,05 à 5 % en poids, davantage de préférence de 0,10 à 2,5 % en poids, encore davantage de préférence de 0,20 à 1,0 % en poids, par 100 % en poids de l'agent d'étanchéité de crevaison.

8. Agent d'étanchéité de crevaison selon la revendication 7,
dans lequel le polymère supplémentaire est un polysaccharide qui est différent de l'agent adhésif, de préférence de la cellulose et/ou un dérivé de la cellulose, davantage de préférence de la cellulose microcristalline, un éther de cellulose contenant un groupe hydroxy-éthyle, un éther de cellulose contenant un groupe hydroxypropyle ou un de leurs mélanges.

9. Agent d'étanchéité de crevaison selon la revendication 7,
dans lequel le polymère supplémentaire est hydrosoluble, de préférence un polysaccharide hydrosoluble, davantage de préférence un éther de cellulose hydrosoluble.

10. Agent d'étanchéité de crevaison selon l'une quelconque des revendications précédentes,
dans lequel l'agent anticongélation est choisi parmi un ou plusieurs alcools, un ou plusieurs éthers et leurs mélanges, de préférence l'agent anti-congélation étant le 1,2-propanediol, le 1,3-propanediol, l'éthane-1,2-diol, le glycérol ou un de leurs mélanges, davantage de préférence l'agent anticongélation étant le 1,3-propanediol ou le glycérol, encore davantage de préférence l'agent anticongélation étant le glycérol.

11. Agent d'étanchéité de crevaison selon l'une quelconque des revendications précédentes,
dans lequel l'agent anti-congélation est présent en une quantité de 5 à 45 % en poids, de préférence de 10 à 40 % en poids, davantage de préférence de 15 à 35 % en poids par 100 % en poids de l'agent d'étanchéité de crevaison.

12. Agent d'étanchéité de crevaison selon l'une quelconque des revendications précédentes,
dans lequel la quantité totale des composés naturels et recyclés dans l'agent d'étanchéité de crevaison est de 90 % en poids ou plus, de préférence de 95 % en poids ou plus par 100 % en poids de l'agent d'étanchéité de crevaison.

13. Agent d'étanchéité de crevaison selon l'une quelconque des revendications précédentes,
dans lequel l'agent d'étanchéité de crevaison est exempt d'un quelconque caoutchouc naturel non recyclé et/ou exempt de quelconques polymères synthétiques non recyclés.

14. Agent d'étanchéité de crevaison selon l'une quelconque des revendications précédentes,
dans lequel l'agent d'étanchéité de crevaison est un agent d'étanchéité de crevaison de pneu de bicyclette.

15. Utilisation de l'agent d'étanchéité de crevaison selon l'une quelconque des revendications 1 à 13 pour réparer des pneus sans tube crevés, pour réparer des pneus crevés ayant un tube interne, pour prévenir les crevaisons dans les pneus sans tube ou pour prévenir les crevaisons dans les pneus ayant un tube interne, lesdits pneus étant de préférence des pneus de bicyclette.
